# EUROPÄISCHE PATENTSCHRIFT

(11) **EP 2 159 135 B1**
(45) Veröffentlichungstag und Bekanntmachung des Hinweises auf die Patenterteilung: **05.01.2011**
(21) Anmeldenummer: 09009192.7
(22) Anmeldetag: 15.07.2009
(51) Int. Cl.: B62D 21/02, B62D 27/02, B62D 31/02, B62D 47/02

(54) **Nutzfahrzeugrahmen mit modularem Multifunktionslagerblock**
Chassis for a commercial vehicle with a multi-function bearer block
Châssis pour véhicule utilitaire avec un bloc de support multifonctionnel

(30) Priorität: 29.08.2008 DE 102008045008
(43) Veröffentlichungstag der Anmeldung: 03.03.2010
(73) Patentinhaber: MAN Nutzfahrzeuge AG, 80995 München (DE)
(72) Erfinder: Eberle, Andreas, 80687 München (DE); Lamche, Oliver, 82140 Olching (DE); Jablonski, Sascha, 82140 Olching (DE); Kreisel, Markus, 86495 Eurasburg (DE); Preisker, Rudolf, 80997 München (DE); Ziehlke, Jürgen, 82152 Planegg (DE)

(56) Entgegenhaltungen:
- EP-A1- 0 940 272
- EP-A2- 1 110 848
- WO-A1-2004/062984
- DE-U1- 9 308 329

## Beschreibung

Die Erfindung betrifft einen Nutzfahrzeugrahmen für einen Lastwagen oder einen Omnibus, der sich aus wenigstens zwei vorgefertigten Modulen zusammensetzt, wobei jedes Modul zwei durch Querträger miteinander verbundene Längsträgerabschnitte umfasst und die jeweils benachbarten Längsträgerabschnitte aneinander angrenzender Module durch ein Befestigungsorgan miteinander verbunden sind.

Der Rahmen eines Nutzfahrzeugs bildet die Basis des Fahrgestells. Er nimmt alle Achsen, den gesamten Antriebsstrang mit Motor-, Getriebe- und Verteilergetriebe auf und trägt das Fahrzeug sowie die Aufbauten. Die Fahrgestellrahmen von Nutzfahrzeugen werden in der Regel aus zwei Längsträgern und mehreren die Längsträger verbindenden Querträgern konstruiert. Da die Fahrzeuge für einen Einsatz mit verschiedenen Aufbauten und Verwendungszwecken geeignet sein müssen, ist es heute üblich, den Nutzfahrzeugrahmen in ein Front-, ein Mittel- und ein Heckmodul zu unterteilen. Je nachdem, für welchen Einsatzzweck das jeweilige Nutzfahrzeug gedacht ist, können vorgefertigte Front-, Mittel- und Heckmodule entsprechend miteinander kombiniert werden. Die jeweiligen Module werden dabei im Bereich der Längsträger durch Verbindungselemente miteinander verbunden.

Aufgrund der hohen Achslast des Front- und Heckmoduls haben sich bei den heutigen Nutzfahrzeugen Starrachsen durchgesetzt. Zu den wichtigsten Bauteilen der Radaufhängung solcher Achsen zählen dabei die so genannten Lenker. Sie verbinden die Rad- bzw. Achsführung mit dem Fahrgestellrahmen und nehmen so die Rad- bzw. Achsführungskräfte auf. Denkbar sind hierbei z.B. Quer- und Dreieckslenker. Längslenker werden dagegen in Kombination mit der Luftfederung eingesetzt, wobei der Längslenker in der Regel nur Kräfte in Längsrichtung übernimmt.

Sowohl bei der Verbindung der einzelnen Rahmenlängsträgergruppen der Front-, Mittel- und Heckmodule als auch bei der Anbindung der Lenker am Rahmenlängsträger kommen unterschiedliche Multifunktionslagerböcke zum Einsatz.

Aus der EP 1 110 848 B1 ist ein Längslenkerbock bekannt, der an Rahmenlängsträgern von Nutzfahrzeugen angeordnet ist und Mittel zu Abstützung und Lagerung von Längslenkern sowie wenigstens einen Stabilisator aufweist. Der Längslenkerbock weist dabei Mittel zur Abstützung und Lagerung von Dreieckslenkern und wenigstens eine Ausmuldung zur bereichsweise umgreifenden Aufnahme des endseitigen Bereiches des Torosionsabschnittes auf. Der Torosionsabschnitt gehört dabei wenigstens einem, quer zur Ausmuldung verlaufenden Stabilisator. Zur Befestigung des jeweiligen Stabilisators am Längslenkerbock wirkt die Ausmuldung mit einer den Stabilisator bereichsweise umgreifenden Haltemuffe zusammen.

Aus der DE 93 08 329 U geht ein Rahmen eines Nutzfahrzeugs, insbesondere eines Frontlenker-Lastkraftwagens hervor, der zwei über Querträger verbundene Längsträger aufweist. Der Rahmen setzt sich aus mehreren vorgefertigten bzw. vormontierten Modulen zusammen, von denen jeder aus zwei durch wenigstens einen Querträger verbundenen LängsträgerAbschnitten besteht. Die Längsträger-Abschnitte zweier aufeinander folgender RahmenModule sind bei der Rahmen-Endmontage zueinander fluchtend angeordnet und werden über einen als Längs- und Quer-Verbindungsorgan dienenden Querträger miteinander verbunden. Hierbei überbrückt der Querträger mit seinen Anschlussorganen, die an beiden Enden vorgesehen sind, die jeweilige Stoßfuge.

Nachteilig ist jedoch, dass bei der Verbindung miteinander die Längsträgerabschnitte bezüglich ihrer Position zueinander nicht variierbar sind. Weiterhin ist eine Krafteinleitung weiterer Achskräfte in den Längsträger an der Verbindungsstelle nicht vorgesehen.

Es ist Aufgabe der Erfindung, einen entsprechend der Nachteile optimierten Nutzfahrzeugrahmen zu schaffen.

Die Aufgabe wird gelöst durch die kennzeichnenden Merkmale des Anspruchs 1.

Der erfindungsgemäße Nutzfahrzeugrahmen ermöglicht die lösbare Befestigung aus miteinander zu verbindenden Längsträgerabschnitten und Querträgern der jeweiligen Front-, Mittel- und Heckmodule. Die Längsträgerabschnitte werden im Folgenden auch als Längsträger oder Rahmenlängsträger bezeichnet. Das Befestigungsorgan stellt dabei die physische Schnittstelle zwischen den benachbarten, miteinander fluchtenden Längsträgerabschnitten der aneinander angrenzenden Module dar. Im Folgenden wird das Befestigungsorgan wegen seiner mehreren Funktionen als Multifunktionslagerbock bezeichnet. Zwischen zwei einander gegenüberliegenden Multifunktionslagerböcken kann ein Querträger die Stabilität des Fahrzeugrahmens zusätzlich erhöhen. Zur Verbindung der in Fahrtrichtung aneinander angrenzenden Längsträgerabschnitte weist der Multifunktionslagerbock unterschiedliche Flanschflächen auf, die der kraftschlüssigen, stoffschlüssigen oder formschlüssigen Verbindung mit den Längsträgerabschnitten dienen. Durch die horizontale und vertikale Ausdehnung des Multifunktionslagerbocks und die an den Außenseiten der Seitenwände des Multifunktionslagerbocks angeordneten Flanschflächen sind die Längsträgerabschnitte der einzelnen aneinander angrenzenden Module über unterschiedliche vertikale und horizontale Ebenen miteinander verbindbar. Die Erfindung ermöglicht somit entsprechend eines Baukastensystems die Verbindung eines Frontmoduls (bzw. eines Heckmoduls) mit einem Mittelmodul höherer bzw. geringerer Bodenfreiheit. Durch den erfindungsgemäßen Nutzfahrzeugrahmen ist somit eine variable Anbindung der Längsträgerabschnitte der einzelnen Rahmenmodule aneinander gewährleistet. Die benachbarten Längsträgerabschnitte aneinander angrenzender Module können in der Vertikalen und in der Horizontalen gegeneinander und gegenüber der jeweiligen Flanschfläche des Multifunktionslagerbocks gekippt bzw. versetzt befestigt werden. Somit ist ein Rahmenversatz zwischen den Modulen in allen Richtungen des Fahrgestellrahmens darstellbar.

In einer weiteren Funktion weist der Multifunktionslagerbock Buchsen auf, an denen achsführende Lenker wie z. B. Längs- bzw. Quer- bzw. Dreiecks-Lenker anlenkbar sind. Der Multifunktionslagerbock kann ein wenigstens ein Bauteil umfassendes, gebogenes oder zusammengeschweißtes Blechbiege- und/oder Stanzteil sein. Gleichfalls ist ein Guss- oder ein Schmiedeteil denkbar. In Abhängigkeit des jeweiligen Einsatzzwecks kann der Multifunktionslagerbock gegossen, geschmiedet oder durch eine Schraub- oder Nietverbindung hergestellt sein. Die Seitenwände des Multifunktionslagerbocks sind erfindungsgemäß gewinkelt angeordnet und können dabei eine U- oder eine L-Form bilden, wobei die Seitenwände dabei rechtwinklig und parallel zueinander verlaufen können.

Zur weiteren Versteifung des Multifunktionslagerbocks sind Einlagewände vorgesehen, die zumindest bereichsweise von den Seitenwänden des Multifunktionslagerbocks eingefasst sind. Denkbar ist, zwei oder mehrere Einlagewände anzuordnen, die parallel zueinander und/oder in einem Winkel zur Längsachse des Lagerbocks verlaufen. Zur Stützung und Führung können Längsträgerabschnitte oder ein Querträger zwischen je zwei Einlagewände bereichsweise in einen Multifunktionslagerbock eingeführt werden und z. B. mit diesem verschweißt werden. Eine vertikale Anordnung des erfindungsgemäßen Multifunktionslagerbocks am Längsträger und eine Vielzahl von im Winkel zueinander an seinen Außenseiten angeordneten Flanschflächen ermöglicht die Anbindung von unterschiedlichen Längs- bzw. Querlenkern mehrerer Achsen. Erfindungsgemäß ermöglicht der Multifunktionslagerbock die Anlenkung verschiedener Lenker in unterschiedlichen horizontalen Ebenen zur Längsachse des Multifunktionslagerbocks. Erfindungsgemäß können am Multifunktionslagerbock auch vertikale Stützen bzw. Abstandshalter zur Beabstandung einer Omnibusseitenwand vom Rahmenlängsträger angebracht sein. Die Stützen zwischen Multifunktionslagerbock und Omnibusseitenwand können ein offenes oder geschlossenes Längsprofil aufweisen. Die Stützen können mit dem Multifunktionslagerbock verschraubt, vernietet, verschweißt oder bereits an diesem angegossen sein. In gleicher Weise kann auch ein Querträger mit dem Multifunktionslagerbock verschraubt, vernietet, verschweißt oder bereits an diesem angegossen sein. Zur biegesteifen Verbindung der Längsträgerabschnitte sind quer zur Fahrtrichtung einander gegenüberliegende Multifunktionslagerböcke durch Querträger verbindbar. Die Querträger können am Multifunktionslagerbock festgeschraubt, genietet oder mit diesem einstückig ausgebildet sein.

Nach einer weiteren Ausführungsform der Erfindung ist der Multifunktionslagerbock relativ zur Fahrzeuglängsachse entweder an der Innenseite des Rahmenlängsträgers oder an dessen Außenseite befestigt. Je nachdem, ob am Multifunktionslagerbock achsführende Lenker angelenkt werden sollen, oder ob er zur Abstützung gegenüber einer Omnibusseitenwand dient, kann der Abstand des Multifunktionslagerbocks somit gegenüber der Fahrzeuglängsachse variiert werden.

Nach einer anderen Ausführungsform der Erfindung weisen die Flanschflächen einen unterschiedlichen Höhen- und/oder Seitenabstand zu dem jeweiligen Längsträger auf. Die Anordnung der Flanschflächen gegeneinander ermöglicht Schraub- oder Nietverbindungen in verschiedenen Ebenen. Es ist darüber hinaus auch vorstellbar, die Flanschflächen an Multifunktionsträger in einem beliebigen Winkel zueinander anzuordnen.

In einer anderen Ausführungsform der Erfindung weist der Multifunktionslagerbock mindestens eine Anschlussbuchse auf. Hierdurch können mehrere Achslenker an je einem Buchsenpaar angeordnet werden.

Nach einer weiteren Ausführungsform der Erfindung sind am Multifunktionslagerbock mehrere Anschlussbuchsen in einem Kreis um einen Anschlusspunkt angeordnet. Die Buchsen können angeschweißt, geschraubt oder genietet sein. Vorteilhaft ist, dass ein hohes Maß an Teilegleichheit die Herstellungskosten des Fahrzeugs verringert und der Multifunktionslagerbock eine hohe Werkstoffeffizienz beinhaltet. Der Multifunktionslagerbock dient als Verbindungselement zwischen den Längsträgerelementen von Front-, Mittel- oder Heckmodul und gewährleistet die Verbindung von Lenkern mit wenigstens einem Modul des Rahmenlängsträgers.

Eine zusätzliche Ausführungsform der Erfindung beinhaltet, dass die Stabilisatoren, Längs- oder Führungslenker über Anschlussbuchsen am Multifunktionslagerbock angelenkt sind. Die Anschlussbuchsen weisen dazu einen dem Verbindungselement des anzuschließenden Baumoduls entsprechenden Innen- und/oder Außenquerschnitt auf.

In einer anderen Ausführungsform der Erfindung ist der Multifunktionslagerbock als Schnittstellenverbindung zweier Längsträgerenden vorgesehen. Denkbar ist zusätzlich, dass die Einlagewände des Multifunktionslagerbocks zur stützenden Halterung von Längsträgerabschnitten oder Querträgern dienen.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: den Multifunktionslagerbock mit einem Schuh und einer Buchse,
- Fig. 2: den am Längsträger befestigten Multifunktionslagerbock,
- Fig. 3: die perspektivische Ansicht des Multifunktionslagerbocks mit angelenktem Längslenker,
- Fig. 4: die perspektivische Ansicht des Multifunktionslagerbocks mit zwei angelenkten Längslenkern,
- Fig. 5: die perspektivische Ansicht des Multifunktionslagerbocks mit einem am Schuh angelenkten Längslenker,
- Fig. 6: den Multifunktionslagerbock mit einer Anbindung für einen Dreieckslenker,
- Fig. 7: einen Querträgerverbund als Schweißgruppierung,
- Fig. 8: einen geteilten Querträgerverbund,
- Fig. 9: einen Querträgerverbund als Schnittstelle zweier Rahmenlängsträgermodule und
- Fig. 10: einen Querträgerverbund in explosionsartiger Darstellung.

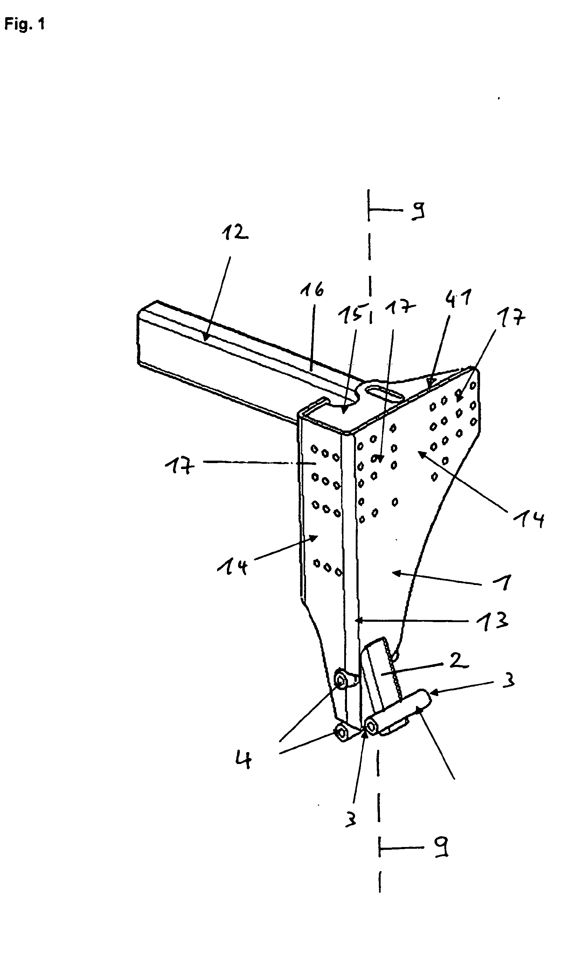

Fig. 1 zeigt einen Multifunktionslagerbock 1 mit einem Schuh 2 und daran angeordneten Buchsen 3 zur Befestigung von Lenkern wie z.B. Längs- oder Querlenkern (nicht gezeigt). In den Multifunktionslagerbock 1 greift ein Querträger 12 ein. In Fig. 1 ist der Multifunktionslagerbock 1 als mehrfach gewinkelter Blechteil dargestellt. Die Winkelungen 13 grenzen die einzelnen Flanschflächen 14 gegeneinander ab. Zur Stabilisierung weist der Multifunktionslagerbock 1 eine als Deckplatte 15 ausgebildete Einlagewand 41 auf, die den Multifunktionslagerbock 1 nach oben hin abschließt und eine Anlagefläche für die Oberseite 16 des Querträgers 12 bildet. An den Flanschflächen 14 des Multifunktionslagerbocks 1 sind in Fig. 1 diverse Lochbilder 17 zu erkennen, die der Befestigung anliegender Flanschflächen 14 benachbarter Längsträger-Abschnitte dienen. Weitere Buchsen 4 sind für die Befestigung von zusätzlichen Längs- und/oder Querlenkern (nicht gezeigt) vorgesehen. Der Multifunktionslagerbock 1 ragt in Fig. 1 um seine Längsachse 9 vom Querträger 12 nach unten in Richtung auf die Fahrbahn hin ab.

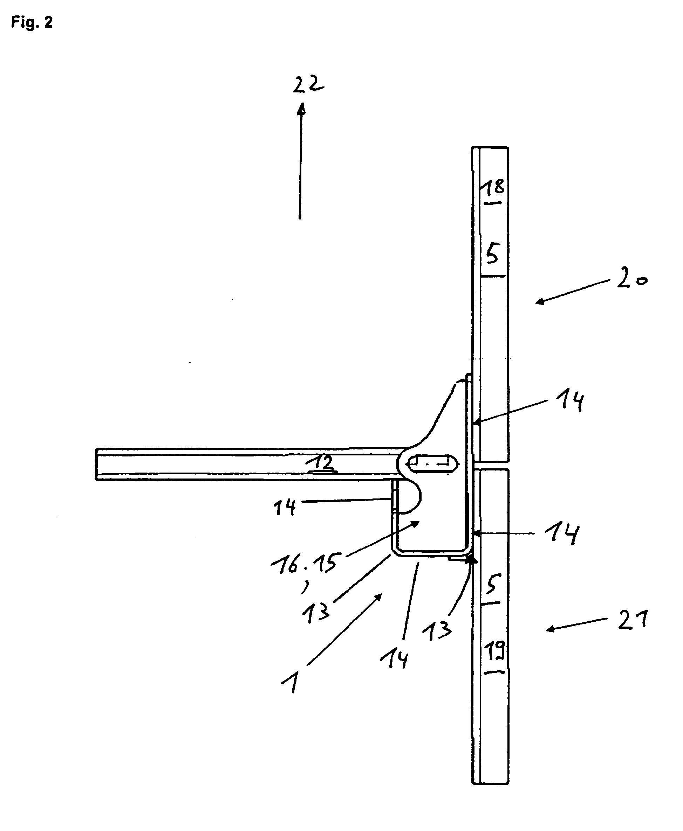

Fig. 2 zeigt den Multifunktionslagerbock 1 mit seinen Flanschflächen 14, an denen stoff-, form- oder kraftschlüssig zwei stirnseitig aneinander stoßende Längsträger 5 befestigt sind. Rechtwinklig zum Rahmenlängsträger 5 greift der Querträger 12 in den Multifunktionslagerbock 1 ein. Fig. 2 zeigt in Draufsicht die Oberseite 16 der Deckplatte 15, die den Multifunktionslagerbock 1 nach oben hin abschließt. In Fig. 2 verbindet der Multifunktionslagerbock 1 die beiden Enden 18; 19 je eines Längsträgers 5, von denen je einer zu einem separaten Rahmenlängsträgermodul 20 bzw. 21 gehört. Der Multifunktionslagerbock 1 weist Winkelungen 13 auf, die die Flanschflächen 14 voneinander abgrenzen. Die Flanschflächen 14 sind dabei in, entgegen und quer zur Fahrtrichtung 22 gesehen ausgerichtet.

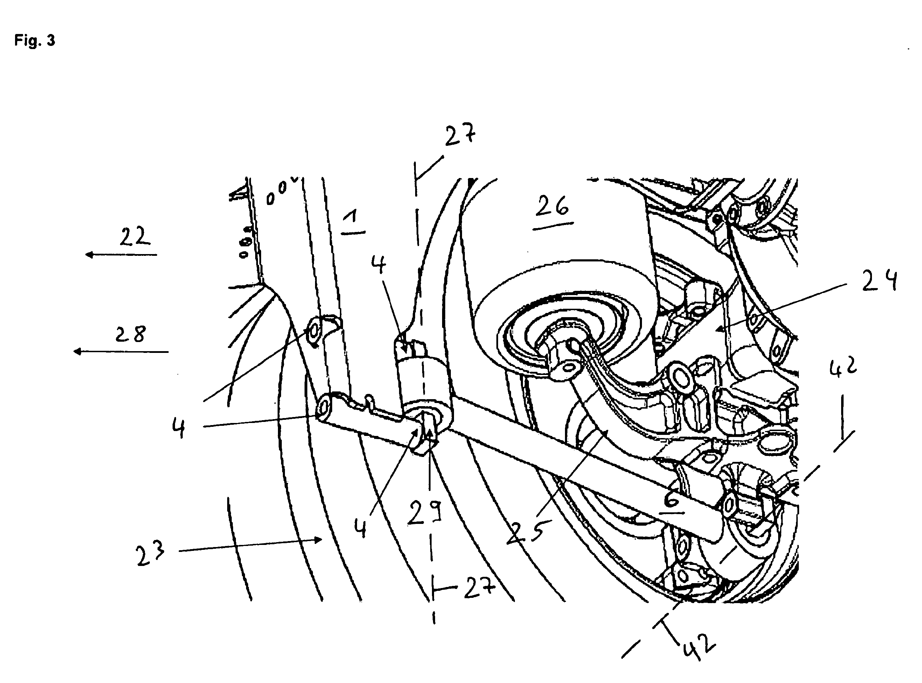

Fig. 3 zeigt den Multifunktionslagerbock 1 in seiner Anordnung am Nutzfahrzeug aus perspektivischer Gesamtansicht von schräg unterhalb des Fahrzeugs aus gesehen. Mit Ziffer 23 ist ein Fahrzeugrad gezeigt, dass an der Stirnseite einer Achse 24 sitzt. An der Achse 24 ist zusätzlich an einem Luftbalgträger 25 ein Luftbalg 26 einer Achsenluftfederung befestigt. In Fahrtrichtung 22 gesehen an den hinteren weiteren Buchsen 4 ist ein Längslenker 6 angelenkt, der den Multifunktionslagerbock 1 mit der Achse 24 verbindet. Der Längslenker 6 weist gegenüber dem Multifunktionslagerbock 1 wenigstens eine Rotationsachse auf. Die Rotationsachse ist mit Bezugsziffer 27 bezeichnet und verläuft senkrecht zur Fahrzeuglängsachse 28. Der Längslenker 6 weist gegenüber der Achse 24 wenigstens eine Rotationsachse auf. Die Rotationsachse trägt die Bezugsziffer 42 trägt und verläuft quer zur Fahrzeuglängsachse 28. In Fahrtrichtung 22 gesehen an der Vorderseite des Multifunktionslagerbocks 1 sind weitere Buchsen 4 gezeigt, die die Anlenkung weiterer Längslenker 6 einer weiteren Achse 24 (nicht gezeigt) ermöglichen. Der Längslenker 6 ist gegenüber dem Multifunktionslagerbock 1 schwenkbar an einem Steg 29 angelenkt, der die beiden weiteren Buchsen 4 miteinander verbindet.

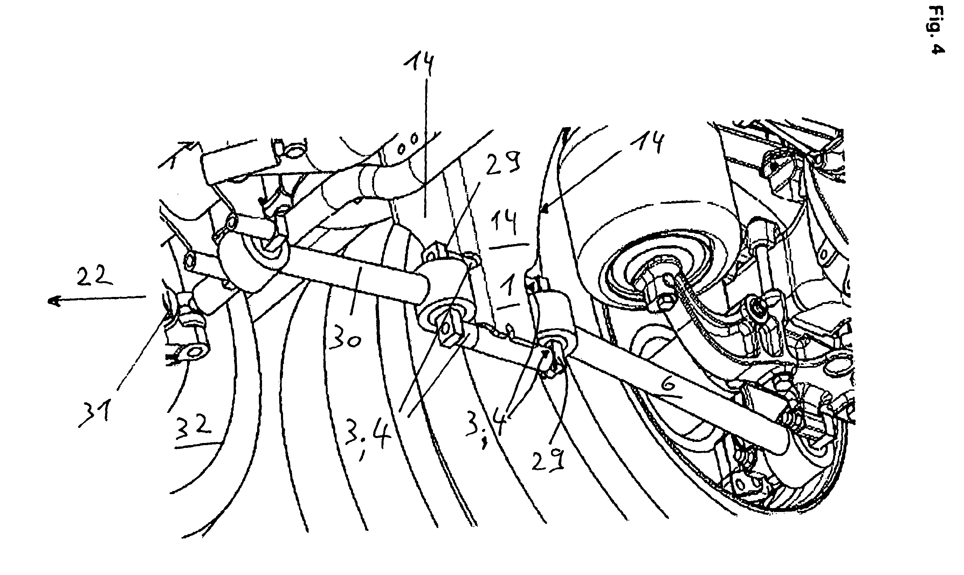

Fig. 4 unterscheidet sich von der Fig. 3 dahingehend, dass sich an den Buchsen 3 des Multifunktionslagerbocks 1 ein weiterer Längslenker 30 schwenkbar etwa in Verlängerung des Längslenkers 6 in Fahrtrichtung 22 erstreckt. Die Längslenker 30; 6 können aber auch gewinkelt zueinander angeordnet sein. Der weitere Längslenker 30 ist an der weiteren Achse 31 schwenkbar angelenkt. Am Multifunktionslagerbock 1 sind in der Fig. 4 an den in Fahrtrichtung 22 gesehen einander gegenüberliegenden Flanschflächen 14 je zwei mit Stegen 29 verbundene Buchsen 4 angeordnet, die der Befestigung der Längsträger 6; 30 dienen. In Fig. 4 ist mit Ziffer 32 ein weiteres Rad der weiteren Achse 31 gezeigt.

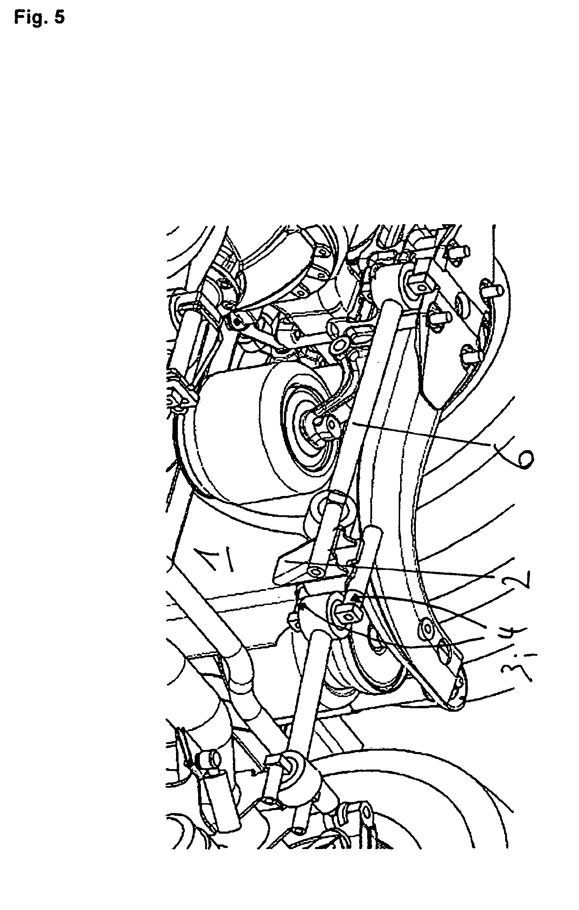

Fig. 5 unterscheidet sich gegenüber der Fig. 4 dahingehend, dass der Längslenker 6 über die Buchse 3; 4 des Schuhs 2 am Multifunktionslagerbock 1 befestigt ist. Der Schuh 2 ist dabei kraft- und formschlüssig mit dem Multifunktionslagerbock 1 verbunden.

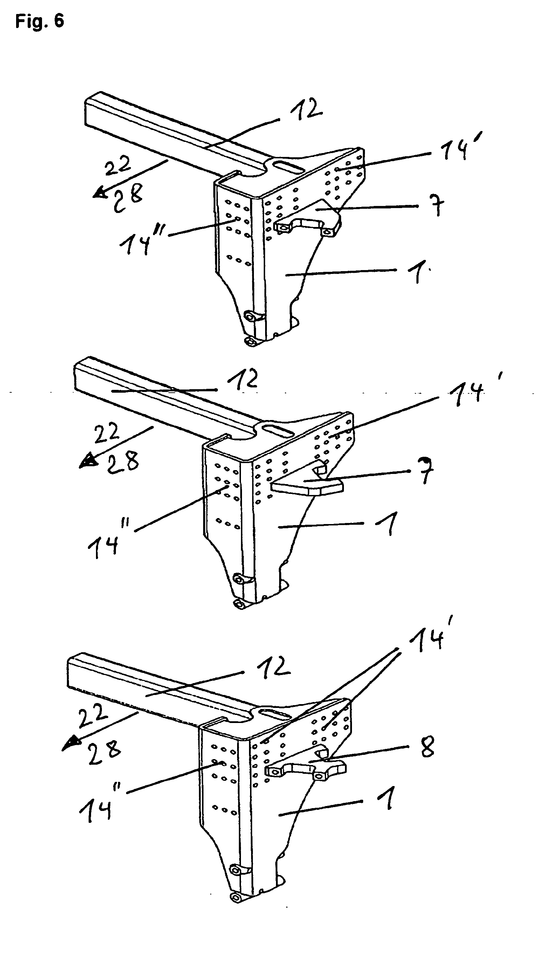

Fig. 6 zeigt in einer Serie von drei Figuren etwa vergleichbar mit Fig. 1 einen Multifunktionslagerbock 1, der mit einem Querträger 12 verbunden ist. Die Flanschflächen 14' des Multifunktionslagerbocks 1 weisen dabei relativ zur Fahrzeuglängsachse 22 nach innen. Die Flanschflächen 14" hingegen weisen in Fahrtrichtung 22. Zur Aufnahme eines Dreieckslenkers (nicht gezeigt) oder anderer Längslenker 6; 30 (nicht gezeigt) sind an der Flanschfläche 14' Anbindungen 7; 8 angeordnet, die in- bzw. entgegen der Fahrtrichtung 22 ausgerichtet sein können. Mit der Ziffer 8 ist eine Anbindung gezeigt, an der in und entgegen der Fahrtrichtung 22 jeweils ein Dreieckslenker (nicht gezeigt) anbringbar ist.

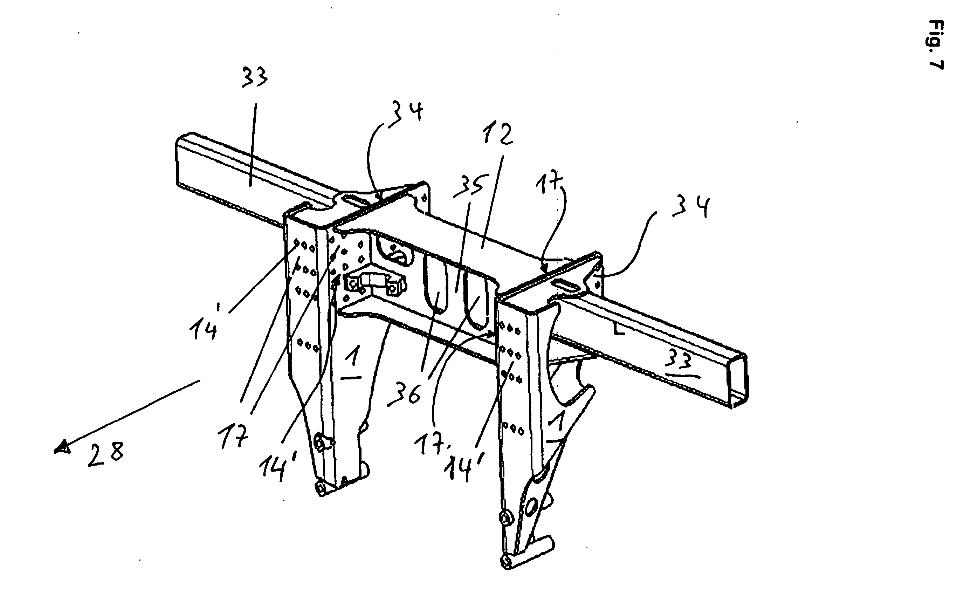

Fig. 7 zeigt einen Querträger 12, der mit seinen Stirnseiten 34 jeweils an einer Flanschfläche 14 eines Multifunktionslagerbocks 1 kraftschlüssig befestigt ist. In Verlängerung des Querträgers 12 sind relativ zur Fahrzeuglängsachse 28 an der Außenseite der Lagerböcke 1 Abstandshalter 33 befestigt, die der Beabstandung der Außenhülle eines Omnibusses dienen. Der Querträger 12 hat ein Doppel-T-Profil, wobei sein mittlerer Steg 35 ein Lochbild 36 aufweist. Über die Lochbilder 17 können der Querträger 12 und die Abstandshalter 33 gegeneinander und mit dem Multifunktionslagerbock 1 verbunden werden. Denkbar ist auch, die genannten Bauteile 12; 1 und 33 anstatt zu verschrauben, miteinander zu vernieten oder zu verschweißen.

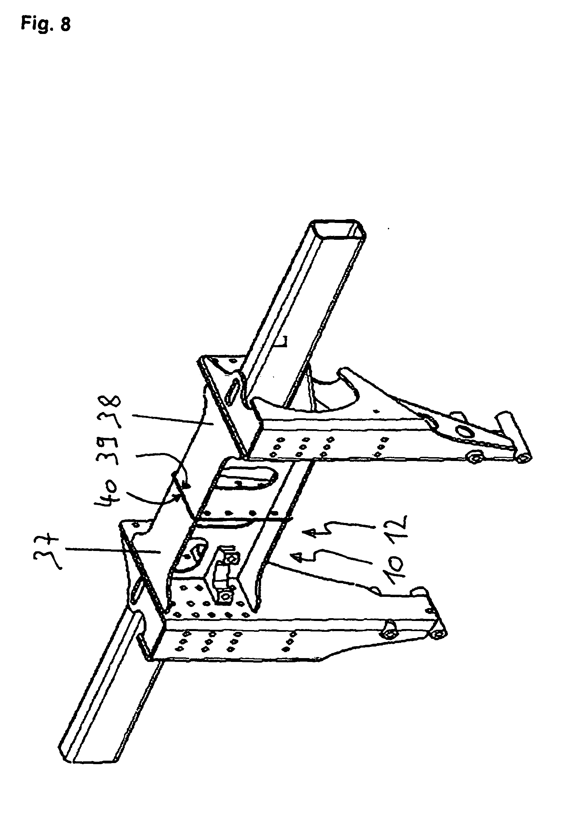

Fig. 8 zeigt einen Querträgerverbund 10 entsprechend der Fig. 7 mit dem Unterschied, dass der Querträger 12 quergeteilt ist und aus zwei Hälften 37; 38 besteht. Die Hälften 37; 38 sind an ihren Flanschflächen 39; 40 miteinander befestigt.

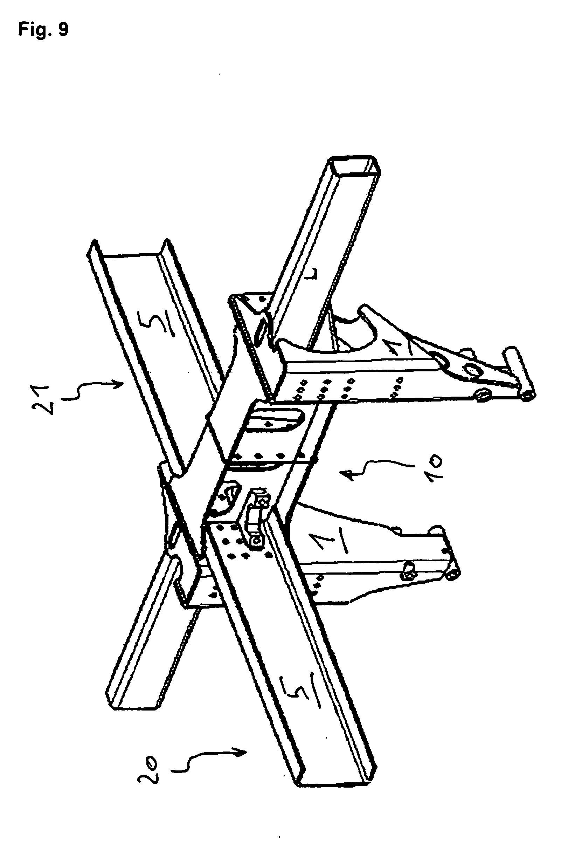

Fig. 9 zeigt einen Querträgerverbund 10 entsprechend Fig. 8 mit dem Unterschied, dass an den Lagerböcken 1 die Längsträger 5 zweier Rahmenlängsträgermodule 20; 21 aneinander angrenzen und miteinander verbunden sind.

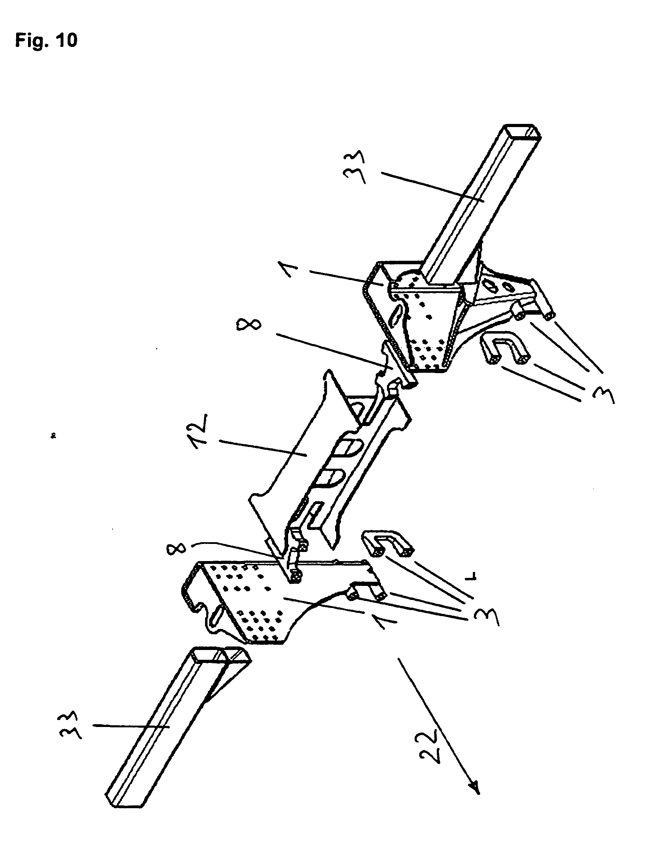

Fig. 10 zeigt den Querträger 12 entsprechend der Fig. 7 als Explosionszeichnung. Die Lagerböcke 1 sind durch den Querträger 12 voneinander beabstandet. In Fahrtrichtung 22 gesehen außen schließen sich in Verlängerung des Querträgers 12 die Abstandshalter 33 an. Die Buchsen 3 sind je Multifunktionslagerbock 1 paarweise angeordnet und in Fahrtrichtung 22 ausgerichtet. In der Ebene der Abstandshalter 33 sind die zweiseitigen Anbindungen 8 angeordnet, die den Anschluss von Dreieckslenkern (nicht gezeigt) ermöglichen.

### Bezugsziffer:

- 1: Multifunktionslagerbock
- 2: Schuh
- 3: Buchse
- 4: weitere Buchse
- 5: Längsträger, Längsträgerabschnitt, Rahmenlängsträger
- 6: Längslenker
- 7: Anbindung einseitig
- 8: Anbindung zweiseitig
- 9: Längsachse des Multifunktionslagerbocks
- 10: Querträgerverbund
- 11:
- 12: Querträger
- 13: Winkelung
- 14: Flanschflächen
- 14': Flanschflächen
- 14": Flanschflächen
- 15: Deckplatte
- 16: Oberseite
- 17: Lochbild
- 18: Enden
- 19: Enden
- 20: Rahmen-Längsträgermodul
- 21: Rahmen-Längsträgermodul
- 22: Fahrtrichtung
- 23: Rad
- 24: Achse
- 25: Luftbalgträger
- 26: Luftbalg
- 27: Rotationsachse
- 28: Fahrzeuglängsachse
- 29: Steg
- 30: weiterer Lenkslenker
- 31: weitere Achse
- 32: weiteres Rad
- 33: Abstandshalter
- 34: Stirnseite
- 35: mittlerer Steg
- 36: Lochbild Querträger
- 37: Hälfte
- 38: Hälfte
- 39: Flanschfläche
- 40: Flanschfläche
- 41: Einlagewand
- 42: Rotationsachse

## Patentansprüche

1. Nutzfahrzeugrahmen insbesondere für einen Lastwagen oder Omnibus, der sich aus wenigstens zwei vorgefertigten Modulen (20;21) zusammensetzt, wobei jedes Modul (20;21) zwei durch Querträger (12) miteinander verbundene Längsträgerabschnitte (5) umfasst und die jeweils benachbarten Längsträgerabschnitte (5) aneinander angrenzender Module (20;21) durch ein Befestigungsorgan miteinander verbunden sind, **dadurch gekennzeichnet, dass** das jeweilige Befestigungsorgan ein Multifunktionslagerbock (1) ist, der Seitenwände aufweist, die zueinander gewinkelt angeordnet sind und die zur Versteifung des Multifunktionslagerbocks (1) zumindest bereichsweise Einlagewände (41) einfassen, die in einem Winkel zur Längsachse (9) des Multifunktionslagerbocks (1) verlaufen und dass an den Außenseiten der Seitenwände Lochbilder (17) zur Bildung von Flanschflächen (14; 14'; 14") angeordnet sind, die der Verbindung von Längsträgerabschnitten (5) oder der Verbindung von Längsträgerabschnitten (5) und Querträgern (12) dienen und dass der Multifunktionslagerbock (1) außerdem Buchsen (3;4) aufweist, an denen achsführende Lenker (6; 30) anschließbar sind.

2. Nutzfahrzeugrahmen nach Anspruch 1, **dadurch gekennzeichnet, dass** der Multifunktionslagerbock (1) relativ zur Fahrzeuglängsachse (28), an der Innenseite des Rahmenlängsträgers (5) befestigt ist.

3. Nutzfahrzeugrahmen nach Anspruch 1, **dadurch gekennzeichnet, dass** der Multifunktionslagerbock (1) relativ zur Fahrzeuglängsachse (28), an der Außenseite des Rahmenlängsträgers befestigt ist.

4. Nutzfahrzeugrahmen nach Anspruch 1, **dadurch gekennzeichnet, dass** die Flanschflächen (14; 14'; 14") einen unterschiedlichen Höhen- und / oder Seitenabstand zum Längsträger (5) aufweisen.

5. Nutzfahrzeugrahmen nach Anspruch 1, **dadurch gekennzeichnet, dass** der Multifunktionslagerbock (1) zur Befestigung von Stabilisatoren, Längs- oder Führungslenkern (6) mindestens eine Buchse (3; 4) aufweist.

6. Nutzfahrzeugrahmen nach Anspruch 5, **dadurch gekennzeichnet, dass** die Buchsen (3; 4) am Multifunktionslagerbock (1) radial zu seiner Längsachse (9) angeordnet sind.

7. Nutzfahrzeugrahmen nach Anspruch 5, **dadurch gekennzeichnet, dass** die Stabilisato-1 ren, Längs- oder Führungslenker (6) über die Buchsen (3; 4) am Multifunktionslagerbock (1) angelenkt sind.

8. Nutzfahrzeugrahmen nach Anspruch 1, **dadurch gekennzeichnet, dass** die Einlagewände (41) zur stützenden Halterung von Längsträgerabschnitten (5) oder Querträgern (12) dienen.

## Claims

1. Chassis for a commercial vehicle, and in particular for a truck or bus/coach, which consists of at least two pre-assembled modules (20; 21), whereby each module (20; 21) provides two side-member sections (5) connected with each other by cross members (12) and the respectively adjacent side-member sections (5) of adjoining modules (20; 21) are connected to each other with a fastening part, **characterised in that** the respective fastening part is a multi-function bearer block (1), which bearer block provides side walls that are arranged at angles to each other and that include insert walls (41) at least in certain areas to increase the rigidity of the multi-function bearer block (1), which insert walls are positioned at an angle to the longitudinal axis (9) of the multi-function bearer block (1) and that hole patterns (17) are arranged on the outer sides of the side walls in order to form flange areas (14; 14'; 14"), which flange areas permit the connection of side-member sections (5) or the connection of side-member sections (5) and cross members (12) and that the multi-function bearer block (1) also provides bushings (3; 4) on which axle-steering control arms (6; 30) can be connected.

2. Chassis for a commercial vehicle in accordance with claim 1, **characterised in that** the multi-function bearer block (1) is fastened on the inner side of the frame side member (5) in relation to the vehicle longitudinal axis (28).

3. Chassis for a commercial vehicle in accordance with claim 1, **characterised in that** the multi-function bearer block (1) is fastened on the outer side of the frame side member in relation to the vehicle longitudinal axis (28).

4. Chassis for a commercial vehicle in accordance with claim 1, **characterised in that** the flange areas (14; 14'; 14") arranged at differing heights and/or lateral distances from the side member (5).

5. Chassis for a commercial vehicle in accordance with claim 1, **characterised in that** the multi-function bearer block (1) provides at least one bushing (3; 4) for fastenings stabilisers, longitudinal control arms or guide rods (6).

6. Chassis for a commercial vehicle in accordance with claim 5, **characterised in that** the bushings (3; 4) on the multi-function bearer block (1) arranged radially in relation to the block's longitudinal axis (9).

7. Chassis for a commercial vehicle in accordance with claim 5, **characterised in that** the stabilisers, longitudinal control arms or guide rods (6) are steered via the bushings (3; 4) on the multi-function bearer block (1).

8. Chassis for a commercial vehicle in accordance with claim 1, **characterised in that** the insert walls (41) act as a supporting mount for side-member sections (5) or cross members (12).

## Revendications

1. Cadre de véhicule industriel, en particulier d'un camion ou d'un bus, qui se compose d'au moins deux modules préfabriqués (20 ; 21), chaque module (20 ; 21) comportant deux parties de longeron (5) reliées entre elles par des traverses (12) et les parties de longeron (5) disposées à chaque fois à une certaine distance de modules voisins les uns des autres (20 ; 21) étant reliées entre elles par un élément de fixation, **caractérisé en ce que** l'élément de fixation respectif est un support de palier multifonctions (1) qui présente des parois latérales disposées à un angle droit les unes par rapport aux autres et entourent les parois à une couche (41) au moins par zone pour rigidifier le support de palier multifonctions (1), ces parois (41) étant montées à un angle par rapport à l'axe longitudinal (9) du support de palier multifonctions (1), **en ce que** des trames de trous (17) pour former les surfaces de bridage (14 ; 14' ; 14") sont disposées sur les côtés extérieurs des parois latérales et les surfaces de bridage servent à relier des parties de longeron (5) ou à relier des parties de longeron (5) et des traverses (12), et **en ce que** le support de palier multifonctions (1) présente en plus des coussinets (3 ; 4) sur lesquels peuvent être raccordés des bras de guidage de l'essieu (6 ; 30).

2. Cadre de véhicule industriel selon la revendication 1, **caractérisé en ce que** le support de palier multifonctions (1) est fixé, relativement par rapport à l'axe longitudinal du véhicule (28), sur le côté intérieur du longeron de cadre (5).

3. Cadre de véhicule industriel selon la revendication 1, **caractérisé en ce que** le support de palier multifonctions (1) est fixé, de manière relative par rapport à l'axe longitudinal du véhicule (28), sur le côté extérieur du longeron de cadre (5).

4. Cadre de véhicule industriel selon la revendication 1, **caractérisé en ce que** les surfaces de bridage (14 ; 14' ; 14") présentent un écart de hauteur et/ou latéral différent par rapport au longeron (5).

5. Cadre de véhicule industriel selon la revendication 1, **caractérisé en ce que** le support de palier multifonctions (1) présente au moins un coussinet (3 ; 4) pour fixer des stabilisateurs, des bras longitudinaux ou des bras de guidage (6).

6. Cadre de véhicule industriel selon la revendication 5, **caractérisé en ce que** les coussinets (3 ; 4) sont disposés sur le support de palier multifonctions (1) de manière radiale par rapport à son axe longitudinal (9).

7. Cadre de véhicule industriel selon la revendication 5, **caractérisé en ce que** les stabilisateurs, les bras longitudinaux ou les bras de guidage (6) sont articulés sur le support de palier multifonctions (1) par le biais des coussinets (3 ; 4).

8. Cadre de véhicule industriel selon la revendication 1, **caractérisé en ce que** les parois à une couche (41) servent au maintien en appui des parties de longeron (5) ou des traverses (12).
